# EUROPEAN PATENT APPLICATION

(11) **EP 2 955 119 A1**
(43) Date of publication of application: **16.12.2015**
(21) Application number: 14749413.2
(22) Date of filing: 04.02.2014
(51) Int. Cl.: B65C 9/00, B65C 9/18, B65C 9/30

(54) **APPARATUS AND METHOD FOR LABELLING PRODUCTS**

(30) Priority: 05.02.2013 ES 201300148; 15.02.2013 ES 201300173
(71) Applicant: Bernat Vilar, Vicente José, 12005 Castellón de la Plana (Castellón) (ES)
(72) Inventor: Bernat Vilar, Vicente José, 12005 Castellón de la Plana (Castellón) (ES)
(74) Representative: Ungria López, Javier
(86) International application number: PCT/ES2014/070075
(87) International publication number: WO 2014/122347

(57) **Abstract**

The invention can be used for the labelling of fruit and other objects. It comprises a labelling device and a feed device for a belt bearing a series of labels. The labelling device comprises an angled leg to which is coupled part of the belt having a belt-advance branch with labels and a return branch without labels, the labels having been detached in a forward region in front of the point at which the two branches meet. The labelling device can bend each label before it is detached from the belt and prior to being stuck on the product. To that end, the labelling device has characteristic means for bending the labels, including a rotary module associated with an encoder.

## Description

### OBJECT OF THE INVENTION

The present invention, as expressed in the title of this specification, is referred to an apparatus and method for labelling products which is able to stick labels of any degree of rigidity, which efficiently achieves the two relevant functions in such labelling processes: the separation without bending of the label from the substrate of a belt which bears the labels, on the one hand, and the compression and sticking of the labels on the product to be labelled which may be a fruit or other objects, on the other hand.

The labelling may be made in a manual or a robotized way, on the different products, such as boxes, fruits and other spheroidal and ellipsoidal products.

The apparatus of the invention is also able to efficiently achieve the quick change and adjustment of a pulling drum and the belt rolled on an adjustable reel that supplies the belt, where the same carries a series of labels.

The invention belongs to the equipment goods sector, specifically, equipment for the processing of ellipsoidal fruits, particularly the labelling of fruits or other spheroidal objects via adhesive labels for fruits supplied by a belt of labels of the type of belt with a substrate divided in two sections according to the longitudinal axis of the belt.

The invention also belongs specifically to the mechanisms to feed industrial machinery with wound belt, particularly for the feeding of belts of labels for different objects, such as fruits or boxes.

### BACKGROUND OF THE INVENTION

Nowadays, manual apparatus to stick labels resulting from a spool on fruits are known. The problem lies in correctly sticking labels of low rigidity, which are generally of a plastic material and especially thin, and in that each and every label is stuck with no folds or wrinkles, by a simple, light, quick and efficient device. Such labels, very common in the horticultural industry because of their higher esthetical quality and better adaptation to the non-uniform shapes of the fruit surface, tend to fold or wrinkle if the simple common methods of manual labelling are used.

On the other hand, the belts of labels for fruits and the industrial belts for those applications which require of the utilization of different belt widths for different products or customers, require a frequent belt change to adjust to the productive requirement. In order to substitute a belt spool, the reel is opened, the new belt spool is introduced, the reel width is regulated to the belt, the belt is passed through the corresponding actuating devices and finally it is connected to the appropriate pulling element. The simplicity and quick regulation of the dispensing reel and of the pulling element to the different width of each belt is essential to maximize the production. This invention provides a quick, simple and reliable system to achieve such functionality.

### DESCRIPTION OF THE INVENTION

In order to meet the objectives and avoid the disadvantages mentioned in previous sections, the invention proposes an apparatus and method for labelling products, where the apparatus comprises a first device for labelling products and a second device for feeding the belt that bears the labels.

The labelling device comprises three differentiated parts: an angled leg, a barrel drum and an edge detector.

The angled leg is an elongated straight element having a front end with flattened V-shaped cross section which is in charge of providing rigidity to the label when it is detached from the belt.

The barrel drum detects the movement relative speed of the labelling device with respect to the fruit or other product to be labelled, and presses evenly over the label and over the fruit where the label is stuck.

The edge detector is in charge of detecting a sinusoidal edge of the labels belt to achieve a perfect coordination of the belt speed with the relative speed of the labelling device by the barrel drum.

The angled leg comprises a straight longitudinal flat bar articulated on a rear end opposite to the location of the barrel drum according to a tilting axis perpendicular to the longitudinal axis of the straight longitudinal flat bar and located on a parallel plane to that of the straight longitudinal flat bar, the tilting axis providing a tilting movement to the angled leg which provides an electronic signal to a control system when the angled leg is in contact with a fruit or other product to be labelled.

The angled leg is folded by its longitudinal axis in a front end adjacent to the barrel drum in such a way that the end section of the angled leg in that front end has a flattened "V" shape with an angle over 90°, while the angled leg section in the rear end corresponding to the tilting axis close to the label feeding spool, is a rectangular section.

In the middle of the "V" section on its upper part and close to the barrel drum an arching wheel is placed, with an axis parallel to the tilting axis and placed at a short distance from the vertical lower point of the "V", a space where the labels belt circulates with a light clearance.

The mission of the arching wheel is bending the labels belt on its midpoint in relation to the longitudinal axis of the labels belt to confer rigidity and stability to the thin labels while they are detached from the belt.

The barrel drum has a curved-convex generator with an elongated cask shape with an axis of rotation parallel to the arching wheel axis of rotation, the barrel drum having a very flexible material and structure in order to adjust to the irregular shapes of the fruits and other spheroidal objects, while such barrel drum is located before the free end of the angled leg "V" section in its upper part.

This way, when the labels are gradually detached from the belt by the usual bending method at 360° of the labels belt, the bent and, therefore, rigidized label is located underneath the barrel drum following its bent shape similar to the arched shape of the label generated by the "V" profile of the angled leg and the arching wheel, the barrel drum being fixed to a location encoder which provides the rotation speed and location of the barrel drum to a electronic control system.

The edge detector is in charge of detecting the beginning of a new label, so the location of the series of labels with respect to the barrel drum does not lose synchronism after the deposition of many labels.

The edge detector is implemented by a detecting element materialized by a miniature barrier photocell or similar, while it is located at the side edge of the labels belt and is in charge of detecting the undulations of the belt side part which have a big number of label belts in the horticultural sector, specially such thin plastic and flexible labels which are usually provided attached on belts integrating a substrate divided in two longitudinal sections: first and second.

In the event that the belt does not have undulated edges, the detecting element is focused on the labels to detect luminosity changes in the label or changes between the label and the base material of the labels belt.

The fruits and spheroidal objects labelling method made by the apparatus for labelling products comprises several differentiated stages: the operator or robot initially brings the labelling device closer and, therefore, the angled leg close to the fruit or other product.

The labelling device moves over a series of close fruits and, therefore, the barrel drum contacts with the first and successive fruits and such barrel drum rotates through contact with the fruit.

The barrel drum provides its location and control system speed by means of the location encoder fixed to the barrel drum, the control system activating the advance of the labels belt at exactly the same speed than the barrel drum perimeter rotation speed.

The label is arched when it contacts the arched wheel, the arching being maintained in accordance with the barrel drum arching.

The arched and rigidized thin label advances under the barrel drum and on the fruit at a relative speed, where this relative speed between the barrel drum pressure point, the label and the fruit, is always non-existent.

This way a perfect sticking of the label over the fruit is achieved, regardless of the irregular speed movement of the operator or the fruits for any shape and condition of the product surface.

The belt feeding device with the labels is made up by two clearly differentiated parts: an adjustable dispensing reel and a torn drum. The adjustable dispensing reel supplies the belt while the torn drum rotates electronically controlled on the basis of production operating parameters, while it collects and rolls the belt once used.

The adjustable dispensing reel is structured from a grooved cylinder integral with a fixed flat base, a built-in disc can be quickly fixed over the grooved cylinder.

The grooved cylinder comprises a cylindrical surrounding structure, with a height slightly over the height of the belt with the greatest width to be used and with a lower diameter than the diameter of the belt spool central hole.

The grooved cylinder has a circular section in its length close to the fixed flat base and a bulged rectangular section in the length of the remaining cylinder, the bulged rectangular shape being the result of cutting the grooved cylinder circular section by two parallel strings separated of the width of the bulged rectangle, so that the bent sectors of the part of the grooved cylinder with bulged rectangular section have a series of identical adjacent trapezoidal grooves perpendicularly facing the grooved cylinder longitudinal axis and separated by triangular walls.

The shape of the trapezoidal groove is that of a long-height rectangular trapezium in relation to the length of its bases, the length of its short basis being slightly smaller than the built-in disc thickness, and the shape of the triangular walls being that of an also long-height right-angled triangle in relation to the length of its basis. The heights of the trapezium and the right-angled triangle are arranged in planes perpendicular to the longitudinal axis of the grooved cylinder.

The built-in disc has a approximately flattened circular shape and is provided with a central hole with the same bulged rectangle shape of the grooved cylinder and of a slightly larger size, so that the grooved cylinder can penetrate in the central hole of the built-in disc introduced with its plane perpendicular to the axis of the grooved cylinder.

After locating a belt spool over the fixed flat base with the grooved cylinder introduced in the axis of such belt spool, the built-in disc is introduced in the grooved cylinder until it contacts the belt spool, rotating the built-in disc afterwards in the only direction allowed by that trapezoidal groove which is aligned with the built-in disc, rotating this built-in disc until it remains pressed by the narrow part of wedge shape of the trapezoidal groove, the built-in disc remaining fixed on the grooving with its plane perfectly perpendicular to the grooved cylinder axis and at a small distance between the belt spool and the built-in disc with the aim of the belt spool can rotate freely between the fixed flat base and the built-in disc.

The torn drum has cylindrical shape of a slightly larger height than the widest belt to be used, one of the bases of the grooved cylinder being located at a short distance from the fixed flat base.

The torn drum is fixed to a driving axis parallel to the axis of the grooved cylinder and provided with a narrow cut defined by a plane parallel to the torn drum axis and located over a string of the circle which makes up the torn drum section, so that the cut has a slightly lower depth than the height of the grooved cylinder and the point of the belt which has been initially unwound when a new belt spool is located in the adjustable dispensing reel is introduced and fixed in such cut, so that a flattened closing lid perpendicular to the axis of the torn drum is located at a short distance from the other basis of the grooved cylinder in order to keep located the belt rolled on the torn drum.

### BRIEF DESCRIPTION OF THE DRAWINGS

The description of the apparatus made in the previous section is complemented by a series of drawings highlighting the most characteristic aspects and points of the invention, drawings which are meant to be illustrative and not limitative, while they are collected at the end as an integral part of this specification. These drawings contribute to a better understanding of the scope of the invention, acting at the same time as a point of reference to understand exactly the apparatus of the invention.

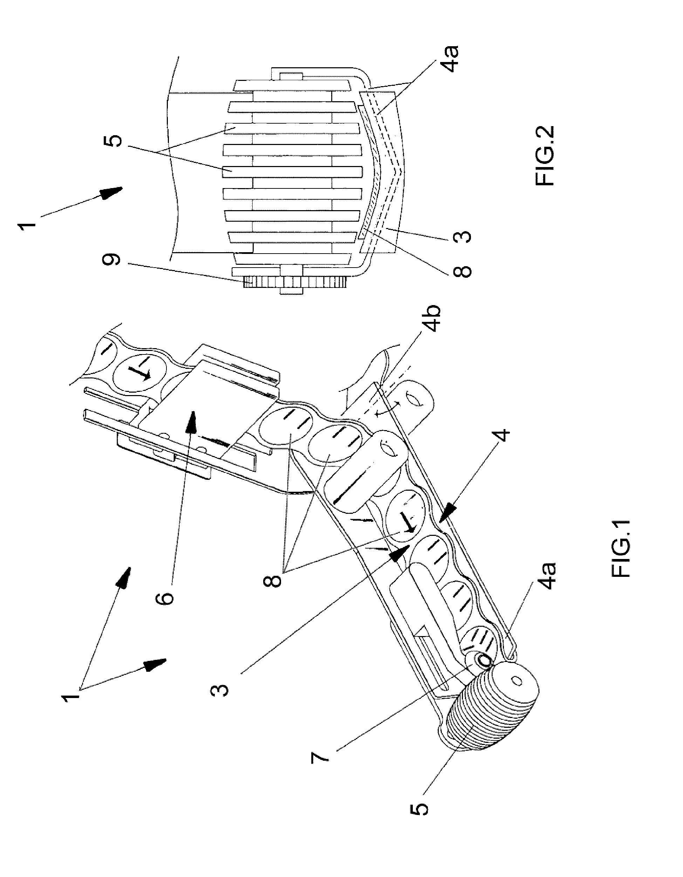

**Figure 1****.-** It shows a perspective view of a labelling device which forms part of the apparatus for labelling products, object of the invention. The labelling method is also an object of the invention.
**Figure 2****.-** It shows a front view of the labelling device.

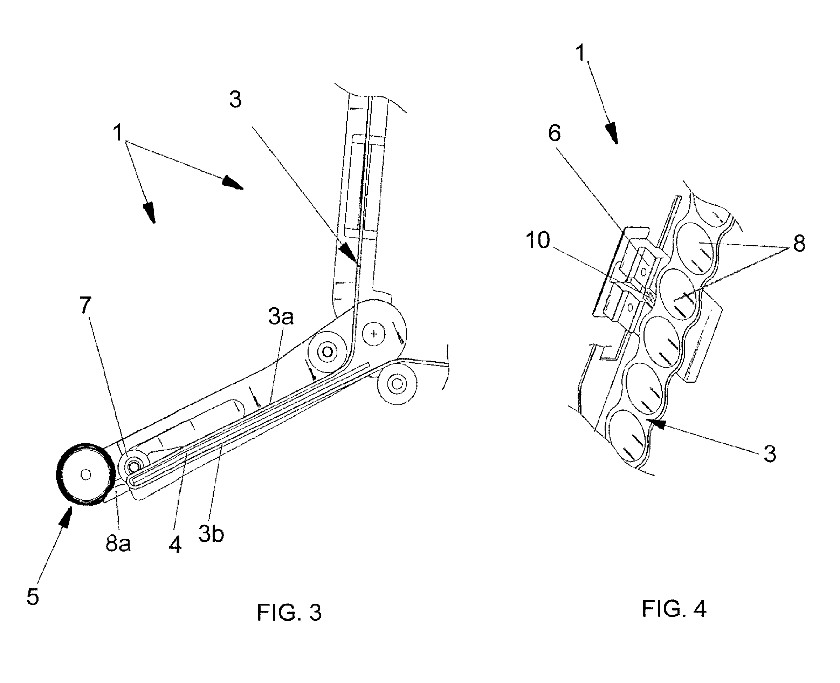

**Figure 3****.-** It shows an elevational view of the labelling device.
**Figure 4****.-** It shows a perspective view of an edge detector of a labelling belt.

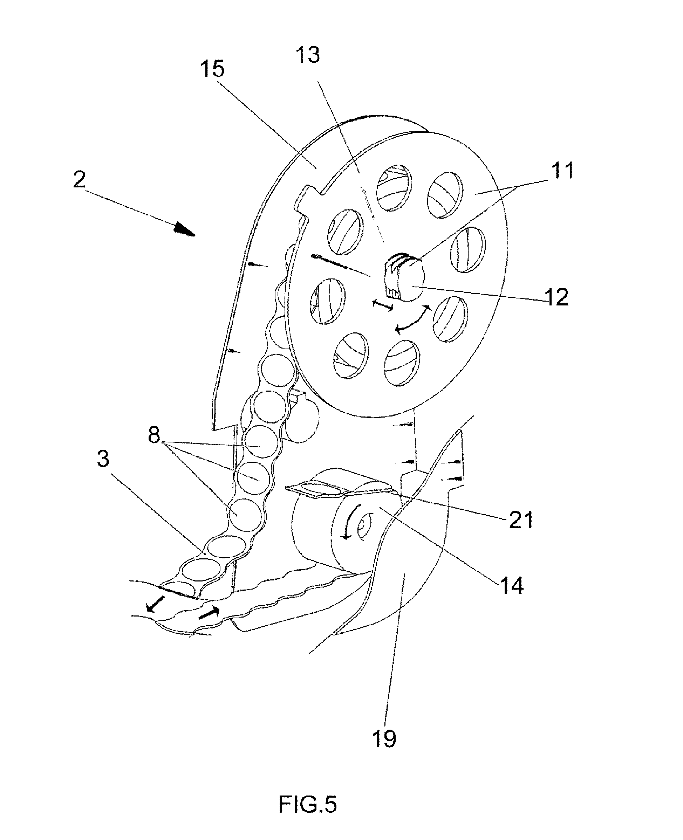

**Figure 5****.-** It shows a perspective view of a feeding device of the belt which bears a series of labels. This feeding device also forms part of the apparatus of the invention.

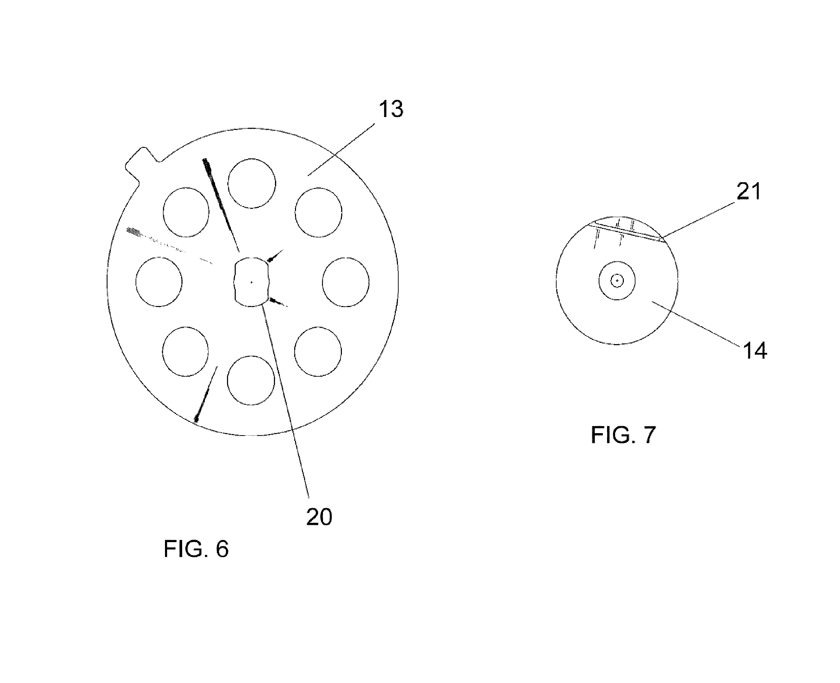

**Figure 6****.-** It shows an elevational view of a built-in disc which forms part of the belt feeding device.
**Figure 7****.-** It shows an elevational view of a torn drum which also forms part of the belt feeding device.

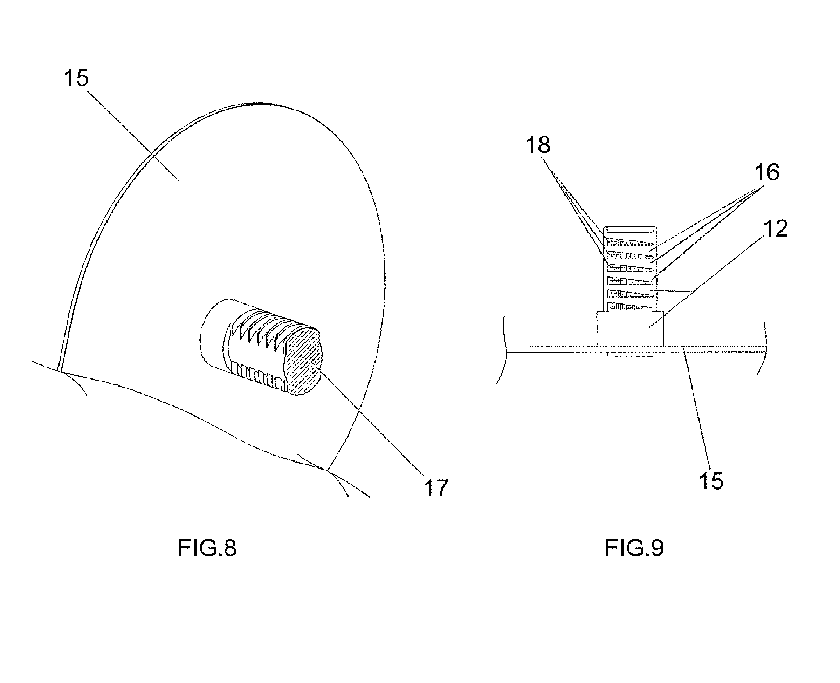

**Figure 8****.-** It shows a perspective view of a grooved cylinder and its fixed flat base, both elements forming part of the belt feeding device.
**Figure 9****.-** It shows an elevational view of the grooved cylinder and its fixed flat base.

### DESCRIPTION OF AN EXAMPLE OF EMBODIMENT OF THE INVENTION

Considering the numbering adopted in the figures, the apparatus for labelling products contemplates the following nomenclature used in the description:
1. - Labelling device.
2. - Belt feeding device.
3. - Belt.
   3a.- Advance branch.
   3b.- Return branch.
4. - Angled leg.
   4a.- Front end.
   4b.- Rear end.
5. - Barrel drum.
6. - Edge detector.
7. - Arching wheel.
8. - Labels.
   8a.- Bent label.
9. - Encoder.
10. - Detecting element.
11. - Adjustable dispensing reel.
12. - Grooved cylinder.
13. - Built-in disc.
14. - Torn drum.
15. - Fixed flat base.
16. - Trapezoidal grooves.
17. - Bulged rectangular section.
18. - Triangular walls.
19. - Removable lid.
20. - Central hole.
21. - Cut.

It comprises in principle a labelling device (1) of products such as fruits and other objects, and a belt (3) feeding device (2) which bears a series of labels (8) which are implemented on the products through the labelling device (1).

The labelling device (1) is structured by several interconnected elements: an angled leg (4), a barrel drum (5) and an edge detector (6).

The belt (3) runs through the labelling device (1), the belt (3) integrating a substrate divided in two longitudinal sections by a weakening line which runs the whole belt: a first section and a second section.

In turn, an advance branch (3a) and a return branch (3b) with no labels (8) as they have been previously detached, are shaped on the belt (3) when it runs through the labelling device, so that when the two branches (3a, 3b) meet, the belt (3) is bent by rotating 360°, time when the label (8) is detached and the belt (3) is divided in the two sections separating by the weakening line, since, otherwise, the belt could not rotate the 360°.

The angled leg (4) is structured from a flattened rectilinear elongated flat bar which has a wide-angle V-shaped front end (4a) with such V-shaped section being placed in the front end (4a) of the angled leg (4) before which is placed the barrel drum (5).

The V-shaped section of the front end (4a) gradually transforms into a flattened orthogonal section in the opposite rear end (4b) of the angled leg (4).

In the concave upper part of the "V" section vertex of the front end (4a) an arching wheel (7) is located, said arching wheel (7) with an axis perpendicular to the longitudinal axis of the angled leg (4) which contacts with the upper central area of the labels (8) belt (3), this belt (3) bearing the labels (8), there being a narrow clearance between the vertex of the "V" section and the lower part of the arching wheel (7), thus making the labels (8) belt (3) to be bent and arched when it advances and reaches the front end (4a) (final area) of the angled leg (4) with "V" section, making the bent label (8a) to detach from the labels (8) belt (3) in an arched way, and achieving a sufficient rigidity of the bent label (8a) in order to avoid it to be folded or wrinkled during the unsticking of the belt (3), advancing and subsequent sticking on the product (fruit, or other objects) by means of the barrel drum (5).

This barrel drum (5) with a shape of elongated cask with an axis parallel to the axis of rotation of the arching wheel (7), with a flexible material and structure, is located before the V-shaped front end (4a) of the angled leg (4) with its lower part being in a plane slightly superior to that of the angled leg (4) and the labels (8) belt (3), so that the bent, and therefore, rigidized label (8a) is located under the barrel drum (5), the arched shape of which is adapted to the shape of the bent label (8a) which maintains its arching at the time it is detached from the labels (8) belt (3). The barrel drum (5) is integral with an encoder (9) of angular position which transmits the position signal to the electronic controller.

The flattened orthoedral-shaped edge detector (6) provided with a central cut through which the labels (8) belt (3) passes, is placed before the arching wheel (7) and is provided with a detecting element (10) such as a miniature barrier photocell, focused on a point of the edge of the labels (8) belt (3) so that it either detects the passing of the sine waves of the edge of the labels (8) belt (3) before the photocell if the labels (8) belt (3) is undulated, or it detects the shade changes in the labels (8), all this to know the position of the labels (8) over the belt (3) and to be able to synchronize the advance of the labels (8) belt (3) with the rotation speed of the barrel drum (5) and achieve a synchronized advance of the barrel drum (5) and of the bent label (8a) which is being detached from the labels (8) belt (3).

The starting of the advance of the belt (3) is carried out by means of a motor with an electronic speed control, where the advance of the belt (3) is started after the starting of the rotation of the barrel drum (5) and of the tilting of the angled leg (4); the advance speed of the labels (8) belt (3) being synchronized with the perimeter speed of the barrel drum (5) in order to achieve a non-existent relative speed between the label, the product to be labelled and the rotating barrel drum (5).

Thanks to the measurement control of the speed of movement of the labelling device with respect to the product to be labelled and the pressing of a label (8) against the product, the measurement control of the instantaneous position of the labels (8) belt (3) and the control for the arching of the labels according to the longitudinal axis of advance of the labels (8) to rigidize them at the time they are gradually detached from the belt (3), thanks to these controls, the position and advance of the label (8) is synchronized at every moment with the speed of variable movement of the labelling device (1) with respect to the product to be labelled caused by an operator and by the movement of the product to be labelled, thus achieving a non-existent relative speed of the labelling device (1) with respect to the product to be labelled, and of the label (8) with respect of the barrel drum (5) which presses over the bent label (8a) during the process of detaching, pressing and sticking of the label (8); and making the arching of the thin label (8) confers sufficient rigidity to said label (8) to be detached and stuck without being wrinkled or folded.

The method of the labelling device (1) to carry out the labelling of the products comprises the following steps:
- synchronized advance of the belt (3) carrying the labels (8);
- arching of the labels (8) at the end of the front end (4a) of the angled leg (4) in correspondence with the area of the front end (4a) of the angled leg (4);
- starting of the unit detachment of the labels (8) at the end of the front end (4a) of the angled leg (4), right at the area where the advance branch (3a) and the return branch (3b) of the belt (3) meet, ahead of the arching wheel (7);
- advance of each arched label (8a) until it is placed under the barrel drum (5) adjusting to the curvature of its generatrix, the barrel drum (5) pressing against the arched label (8a) to stick it on the product to be labelled.

The belt (3) feeding device (2) is structured from two main elements: an adjustable dispensing reel (11) made up by a grooved cylinder (12) and a built-in disc (13), and a torn drum (14).

The adjustable dispensing reel (11) supplies the belt (3) rolled as a spool and is made up by the grooved cylinder (12) fixed perpendicularly to a fixed flat base (15) and by the flat and circular-shaped built-in disc (14), so that, after being introduced in the grooved cylinder (12) and rotated, it is embedded in the narrow part of one of the possible trapezoidal grooves (16) which form part of the grooved cylinder (12).

This grooved cylinder (12), in the area where the trapezoidal grooves (16) are located, is approximately of bulged rectangular section (17) and in the outer bent sectors of such bulged rectangular section (17) the identical adjacent trapezoidal grooves (16) separated by triangular walls (18) are arranged, so that the width of the short side of the trapezoidal groove (16) is slightly narrower than the width of the built-in disc (13), thus making a rotation of the built-in disc (13), placed on a belt spool (3), to fix the built-in disc (13) in the trapezoidal groove which is face to face and, at the same time, the built-in disc (13) to be slightly separated from the belt (3) spool due to the strategic geometrical arrangement of the trapezoidal groove, thus leaving the built-in disc (13) perfectly perpendicular to the axis of the grooved cylinder (12), so that the belt (3) spool may rotate freely without friction between the fixed flat base (15) and the built-in disc (13). A removable lid (19) covers the adjustable dispensing reel (11) and acts as a wall of the torn drum (14).

The built-in disc (13), flat and thin, is provided with a central hole (20) the shape of which is identical to the bulged rectangular section (17) of the grooved cylinder (12) but slightly larger in size, the central hole (20) being where the grooved cylinder (12) is introduced.

The torn drum (14) which has a cylindrical shape, is actuated by an electronically-controlled motor, and such torn drum (14) with is provided with a narrow cut (21) with a depth slightly smaller than the height of the torn cylinder (14) and with a larger width than the width of the belt (3), where the point of a new belt (3) which has been located in the grooved cylinder (12) is fixed.

Additionally, supplementary elements to cause the whole apparatus of the invention to work correctly are provided, elements such as an electronic controller, stops, sensors and a pulling motor.

Extending this description is not considered necessary in order that any person skilled in the art understand the scope of the invention and the advantages derived thereof.

The materials, shape, size and arrangement of the elements will be subject to variation as long as it does not imply an alteration of the essence of the invention.

The terms in which this specification has been written shall always be interpreted in a broad and non-limitative sense.

## Claims

1. **Apparatus for labelling products,** comprising at least a labelling device (1) through which a belt (3) runs which bears a series of labels (8); where this belt (3) is divided in two longitudinal sections via a loosening line; the belt (3) making up, on its way through the labelling device, (1) an advance branch (3a) of the belt (3) and a return branch (3b) without labels (8) since they have been previously detached;
**characterized in that**:
- the labelling device (1) comprises means for measuring the instantaneous position of the belt (3) of labels;
- at a forward area of the labelling device (1) before the place where both branches of the belt (3), advance branch (3a) and return branch (3b), meet, a rotating module is located in such forward area comprising at least a barrel drum (5) rotating freely which has a curved-convex generatrix; the barrel drum (5) rotating around a direction perpendicular to the longitudinal direction of the belt (3); where the rotating module is a measuring means for measuring the speed of movement of the labelling device (1) with respect to the product to be labelled and is also a pressing means of each label over the product to be labelled;
- the two branches (3a) and (3b) of the belt (3) are respectively arranged over and under an angled leg (4) that comprises a V-shaped front end (4a) adjacent to the rotating module; a rotating freely arching wheel (7) being over the front end (4a) of the angled leg (4), over the rotating freely arching wheel (7) a central area of the advance branch (3a) and of the labels (8) adopting an arching position is contacted successively during the advance of the belt (3); where the V-shaped front end (4a) in combination with the arching wheel (7) during the advance of the belt (3) constitute the means for the arching of the labels;
- the angled leg (4) tilts by a rear end (4b) opposite to the V-shaped front end (4a); where the tilting is around an axis perpendicular to the longitudinal axis of the belt (3) and angled leg (4).

2. **Apparatus for labelling products,** according to claim 1, **characterized in that** the angled leg (4) comprises an elongated and flattened rectangular configuration, with a rectangular section in its rear end (4b) which is changing progressively to a curved-concave section until reaching a V-shaped configuration in its front end (4); where the tilting of the angled leg (4) has an angular amplitude delimited between 0° and 10°.

3. **Apparatus for labelling products,** according to claim 2, **characterized in that** the V-shaped configuration of the front end (4) of the angled leg comprises an angular amplitude larger than 90°.

4. **Apparatus for labelling products,** according to any one of the previous claims, **characterized in that** the rotating barrel drum (5) of the rotating module comprises a flexible structure which is deformed when it presses against the product during the transfer of the label (8) to such product; where such transfer brings about the toppling of the angled leg (4).

5. **Apparatus for labelling products,** according to any one of the previous claims, **characterized in that the barrel** drum (5) is integral with a position encoder (9) which transmits the position and speed of rotation of the barrel drum (5) to a control system when the barrel drum (5) contacts with the product to be labelled, while the barrel drum (5) rotates during the displacement of the apparatus.

6. **Apparatus for labelling products,** according to any one of the previous claims, **characterized in that** the curvature of the barrel drum (5) generator corresponds to the arching curvature of the bent label (8a) which gradually detaches from the belt (3) in correspondence with the front end (4a) of the angled leg (4); the label (8) being adjusted during its detachment over the lower part of the barrel drum (5).

7. **Apparatus for labelling products,** according to any one of the previous claims, characterized because it comprises means for measuring the instantaneous position of the labels (8) belt (3) such means for measuring consisting of an optical edge detector (6) focused on one of the undulated edges of the belt (3), where the resting position of each label (8) in which this one is detached, is located exactly in the "V" front end (4a) of the angled leg (4).

8. **Apparatus for labelling products,** according to claim 7, **characterized in that** the start of the advance of the belt (3) is made by means of an electronic speed control motor, where the advance of the belt (3) is started after the start of the rotation of the barrel drum (5) and of the tilting of the angled leg (4); the advance speed of the labels (8) belt (3) being synchronized with the perimeter speed of the barrel drum (5) to achieve a non-existent relative speed between the label, the product to be labelled and the rotating barrel drum (5).

9. **Apparatus for labelling products,** according to any one of the previous claims, **characterized in that**:
- it comprises a feeding device (2) of belt made up by a grooved cylinder (12) integrally joined and perpendicular to a fixed flat base (15), where a built-in disc (13) over the grooved cylinder (12) is assembled/ disassembled by rotation;
- the grooved cylinder (12) has a height larger than the width of the larger belt (3) to be used;
- the grooved cylinder (12) comprises a first stretch of circular section in correspondence with its attachment to the fixed flat base (15); and a second stretch of larger length which results from cutting a circular section of the grooved cylinder (12) by two parallel strings which define two opposing planes equidistant from the axis of the grooved cylinder (12);
- bent sectors of the non-circular section of the second stretch of the grooved cylinder (12) are provided with some trapezoidal grooves (16) of a rectangular trapezium shape and separated by triangular walls (18) with a right-angled triangle shape placed in adjacent planes parallel and perpendicular to the axis of the grooved cylinder (12), the width of the short side of the rectangular trapezium being of a smaller length than the thickness of the built-in disc (13);
- the built-in disc (13) is provided with a central hole (20) with a section identical to the non-circular section of the second stretch of the grooved cylinder (12); the section of the central hole (20) being slightly larger in size than the section of that second stretch of the grooved cylinder (12);
- the built-in disc (13) is screwed by wedging in one of the trapezoidal grooves; where the built-in disc (13) is placed at a plane perpendicular to the axis of the grooved cylinder (12) supporting a belt spool fitted with sufficient clearance between two parallel planes of the built-in disc (12) and of the fixed base (15).

10. **Apparatus for labelling products,** according to claim 9, **characterized in that**:
- it comprises a cylindrical-shaped torn drum (14) as motorized pulling element having a larger height than the widest belt to be used;
- the torn drum (14) is provided with a cut (21) defined by a plane parallel to the axis of such torn drum (14) and placed over a string of the circle which forms the section of the torn drum (14);
- the cut (21) has a smaller depth than the height of the torn drum (14) and a larger width than the width of the belt (3);
- in the cut (21) of the torn drum (14) the end of the belt (3) is introduced and fixed for its pulling and rolling.

11. **Method for labelling products,** according to the previous claims, **characterized in that** it comprises the following stages:
- synchronized advance of the belt (3) carrying the labels (8);
- arching of the labels (8) and of the advance branch (3a) of the belt (3) when they contact on their upper side against the arching wheel (7) at the front end (4a) area of the angled leg (4);
- starting of the unit detachment of the labels (8) at the place where the advance branch (3a) and the return branch (3b) of the belt (3) meet, before the arching wheel (7);
- advance of each arched label (8a) until being placed under the barrel drum (5) adjusting to its generatrix curvature, pressing the barrel drum (5) against the arched label (8a) to stick it on the product to be labelled.
